# EUROPEAN PATENT APPLICATION

(11) **EP 3 306 485 A1**
(43) Date of publication of application: **11.04.2018**
(21) Application number: 17159569.7
(22) Date of filing: 07.03.2017
(51) Int. Cl.: G06F 17/27, G06F 17/30

(54) **METHOD FOR EDITING MACHINE LEARNING RESULT AND INFORMATION PROCESSING APPARATUS**

(30) Priority: 06.10.2016 US 201615287297
(71) Applicant: Fujitsu Limited, Kanagawa 211-8588 (JP)
(72) Inventor: Soma, Sanae, Kanagawa, 211-8588 (JP); Nakamura, Masakazu, Kanagawa, 211-8588 (JP); Sawano, Yoshinobu, Sunnyvale, CA 94085 (US)
(74) Representative: Hoffmann Eitle

(57) **Abstract**

A machine learning result editing program that is a processing program configured to generate a group of relevant words on a basis of expressions of words learned by a machine learning processing program that learns the expressions of the words on a basis of input data, the machine learning result editing program that causes a computer to execute a process including, causing (132) a display unit (111) to display the generated group of relevant words; and exercising (133) control so that, after a designation of a word to be eliminated from the displayed group of relevant words is received, when a process is performed by using the group of relevant words generated on the basis of the expressions of the words learned by the machine learning processing program, the process is performed by using the group from which the designated word has been eliminated.

## Description

### FIELD

The embodiments discussed herein are related to a recording medium having recorded thereon a machine learning result editing computer program (hereinafter, "machine learning result editing program"), a method for editing a machine learning result, and an information processing apparatus.

### BACKGROUND

Services are offered to make various types of information available where an input of one or more keywords is received from a user, a search is conducted by using a search engine with the received keywords, and a search result is presented. However, depending on amounts of knowledge users have, there are some situations where users are not able to find the information searched for, because the users are not able to think of appropriate keywords. To cope with these situations, a service using a chat application or the like is proposed in recent years where a query from a user is answered by a robot called a chatbot based on know-how of experts having a large amount of knowledge. For example, according to a method that has been proposed, a service is provided by a financial institution where a chatbot learns data related to financial products in a machine learning process and answers queries from clients who are the users.
[Patent Literature 1] International Publication Pamphlet No. WO 2016/084336

However, when the financial institution has arranged the chatbot to learn the data related to the financial products in the machine learning process, for example, there are some situations where the financial institution does not want the chatbot to output, as a response to a query, the information about a product of which the offer will end soon, for example. In those situations, it would take a lot of trouble to eliminate the information about the product of which the offer will end soon, from a large amount of learning-purpose data. For this reason, it is difficult to easily eliminate the information about the product of which the offer will end soon.

### SUMMARY

According to an aspect of an embodiment, a machine learning result editing program that is a processing program configured to generate a group of relevant words on a basis of expressions of words learned by a machine learning processing program that learns the expressions of the words on a basis of input data, the machine learning result editing program that causes a computer to execute a process including, causing (132) a display unit (111) to display the generated group of relevant words; and exercising (133) control so that, after a designation of a word to be eliminated from the displayed group of relevant words is received, when a process is performed by using the group of relevant words generated on the basis of the expressions of the words learned by the machine learning processing program, the process is performed by using the group from which the designated word has been eliminated.

### BRIEF DESCRIPTION OF DRAWINGS

FIG. 1 is a block diagram illustrating an exemplary configuration of an information processing apparatus according to a first embodiment;
FIG. 2 is a drawing illustrating an example of a learning result storage unit;
FIG. 3 is a drawing illustrating an example of an editing screen;
FIG. 4 is a drawing illustrating another example of the editing screen;
FIG. 5 is a drawing illustrating examples of an elimination and an addition of words;
FIG. 6 is a drawing illustrating yet another example of the editing screen;
FIG. 7 is a drawing illustrating yet another example of the editing screen;
FIG. 8 is a flowchart illustrating an example of a machine learning result editing process according to the first embodiment;
FIG. 9 is a flowchart illustrating an example of a responding process according to the first embodiment;
FIG. 10 is a block diagram illustrating an exemplary configuration of an information processing apparatus according to a second embodiment;
FIG. 11 is a drawing illustrating an example of a blacklist storage unit;
FIG. 12 is a drawing illustrating an example of a whitelist storage unit; and
FIG. 13 is a drawing illustrating an example of a computer that executes a machine learning result editing program.

### DESCRIPTION OF EMBODIMENTS

Exemplary embodiments of a recording medium having recorded thereon a machine learning result editing program, a method for editing a machine learning result, and an information processing apparatus disclosed in the present application will be explained in detail below, with reference to the accompanying drawings. The disclosed technical features are not limited by the exemplary embodiments. Further, it is acceptable to combine any of the embodiments described below as appropriate, as long as no conflict arises.

### [a] First Embodiment

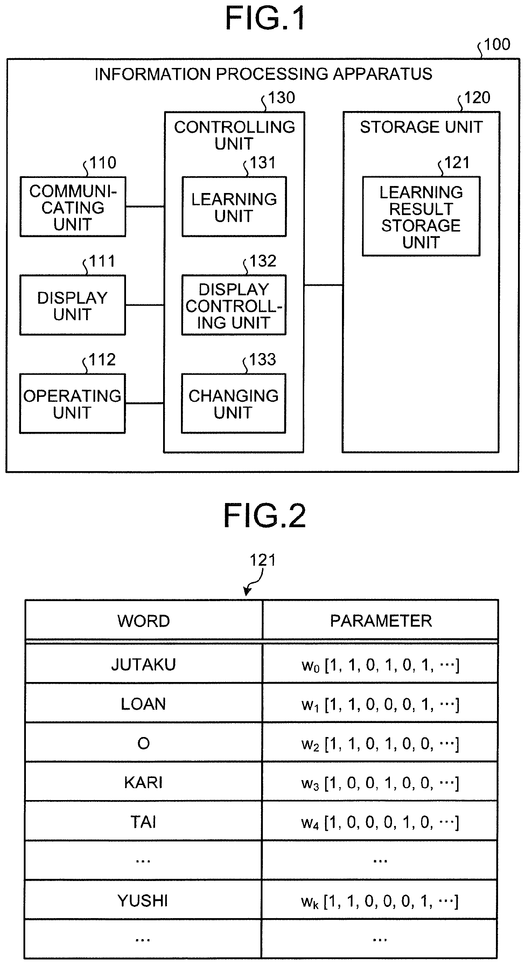

FIG. 1 is a block diagram illustrating an exemplary configuration of an information processing apparatus according to an embodiment. An information processing apparatus 100 illustrated in FIG. 1 is, for example, an information processing apparatus configured to perform a machine learning process by inputting learning-purpose data to a machine learning processing computer program (hereinafter, "machine learning processing program") for a chatbot designed for a financial institution and to edit a machine learning result. In other words, the information processing apparatus 100 is configured to generate a group of relevant words, on the basis of expressions of words learned by the machine learning processing program that learns the expressions of the words on the basis of the input data. The information processing apparatus 100 is configured to cause a display unit to display the generated group of relevant words. The information processing apparatus 100 is configured to exercise control so that, after a designation of a word to be eliminated from the displayed group of relevant words is received, when a process is performed by using the group of relevant words generated on the basis of the expressions of the words learned by the machine learning processing program, the process is performed by using the group from which the designated word has been eliminated. With this arrangement the information processing apparatus 100 is able to easily eliminate the word from the machine learning result. In this situation, the words each do not necessarily have to be a word and may each be a morpheme.

Next, a configuration of the information processing apparatus 100 will be explained. As illustrated in FIG. 1, the information processing apparatus 100 includes a communicating unit 110, a display unit 111, an operating unit 112, a storage unit 120, and a controlling unit 130. In addition to the functional units illustrated in FIG. 1, the information processing apparatus 100 may also include various types of functional units included in a known computer, such as various types of input devices and audio output devices, for example. Further, although morphemes are used as analysis results of the sentences in the following explanations, words may be used alternatively.

The communicating unit 110 is realized by using, for example, a Network Interface Card (NIC) or the like. The communicating unit 110 is a communication interface that is connected to another information processing apparatus via a network (not illustrated) in a wired or wireless manner and is configured to control communication of information with the other information processing apparatus. For example, the communicating unit 110 receives the learning-purpose data from the other information processing apparatus. The communicating unit 110 then outputs the received learning-purpose data to the controlling unit 130. In other words, the learning-purpose data is an example of the input data. Further, when having received query data from the other information processing apparatus, the communicating unit 110 outputs the received query data to the controlling unit 130. Also, when response data is input thereto from the controlling unit 130, the communicating unit 110 transmits the input response data to the other information processing apparatus.

The display unit 111 is a display device configured to display various types of information. The display unit 111 may be realized as a display device by using, for example, a liquid crystal display device or the like. The display unit 111 is configured to display various types of screens such as an editing screen input thereto from the controlling unit 130.

The operating unit 112 is an input device configured to receive various types of operations from an administrator of the information processing apparatus 100. The operating unit 112 may be realized as an input device by using, for example, a keyboard and/or a mouse. The operating unit 112 is configured to output the operations input thereto by the administrator, to the controlling unit 130 as operation information. The operating unit 112 may be realized as an input device by using a touch panel or the like. The display device serving as the display unit 111 and the input device serving as the operating unit 112 may integrally be structured.

The storage unit 120 may be realized by using, for example, a semiconductor memory device such as a Random Access Memory (RAM) or a flash memory, or a storage device such as a hard disk or an optical disk. The storage unit 120 includes a learning result storage unit 121. Further, the storage unit 120 is configured to store therein information used in processes performed by the controlling unit 130.

The learning result storage unit 121 is configured to store therein parameters used for the expressions of the words learned by the machine learning processing program so as to be kept in correspondence with the words. FIG. 2 is a drawing illustrating an example of the learning result storage unit. As illustrated in FIG. 2, the learning result storage unit 121 has the items "word" and "parameter". For example, the learning result storage unit 121 stores therein one record for each of the words. In the following explanations, when a machine learning result is edited, morphemes and words may collectively be referred to as words.

Each "word" is either a morpheme or a word obtained by performing a morpheme analysis on a sentence in the learning-purpose data. Each "parameter" is information indicating a vector that corresponds to the word representing the machine learning result. In the example illustrated in FIG. 2, vectors w₀ to w₄ correspond, as parameters, to the words "jutaku", "loan", "o", "kari", and "tai" in the sentence "Jutaku loan o kari tai". In another example, vectors w₀ to w₇ correspond, as parameters, to the words "I", "want", "to", "borrow", "a" "home", "loan", "." in the sentence "I want to borrow a home loan."

Returning to the description of FIG. 1, the controlling unit 130 is realized as a result of, for example, causing a computer program stored in an internal storage device to be executed by a Central Processing Unit (CPU), a Micro Processing Unit (MPU), or the like, while a RAM is used as a working area. Alternatively, for example, it is also acceptable to realize the controlling unit 130 by using an integrated circuit such as an Application Specific Integrated Circuit (ASIC) or a Field Programmable Gate Array (FPGA). The controlling unit 130 includes a learning unit 131, a display controlling unit 132, and a changing unit 133 and is configured to realize or execute functions or actions of information processing processes described below. Further, possible internal configurations of the controlling unit 130 are not limited to the configuration illustrated in FIG. 1. The controlling unit 130 may have any other configuration as long as the controlling unit 130 is configured to perform the information processing processes described below.

When having received the learning-purpose data from the other information processing apparatus via the communicating unit 110, for example, the learning unit 131 performs a machine learning process on the basis of a sentence included in the received learning-purpose data. In other words, the learning unit 131 is an example of an executing unit configured to execute the machine learning processing program that learns the expression of the words, on the basis of the input data. As the machine learning process, for example, the learning unit 131 understands and learns meanings of words by expressing the words as vectors, while using a neural network. As an algorithm for the machine learning process, the learning unit 131 may use CBoW or Skip-gram, for example. Examples of implementations for the machine learning process include Word2Vec.

For example, the learning unit 131 performs a morpheme analysis on the sentence included in the learning-purpose data. The learning unit 131 calculates vectors w serving as the parameters, by applying Skip-gram, for example, to each of the morphemes in the result of the analysis, i.e., the words. The learning unit 131 stores the calculated vectors w into the learning result storage unit 121 so as to be kept in correspondence with the words. Each of the vectors w is, for example, a vector in an inner product space and may be a ten- to 100- dimensional vector. The initial value of the vectors w is an arbitrary value.

Further, when two morphemes have meanings close to each other, the vectors w thereof are similar to each other. In the example in FIG. 2, the vector w₁ [1,1,0,0,0,1, ... ] of the word "loan" and the vector wₖ [1,1,0,0,0,1, ... ] of the word "yushi (financing)" are vectors of which, for example, the level of similarity calculated on the basis of an inner product (i.e., the closeness of the vocabulary) is 99% or higher.

Further, for example, when having received query data from the other information processing apparatus (not illustrated) via the communicating unit 110, the learning unit 131 refers to the learning result storage unit 121 and generates response data for the query data. In that situation, one or more words deleted by the changing unit 133 are eliminated when the response data is generated. Further, one or more words added by the changing unit 133 are added when the response data is generated. The learning unit 131 transmits the generated response data to the other information processing apparatus (not illustrated) via the communicating unit 110.

In other words, the learning unit 131 performs the process by using the group of relevant words generated on the basis of the expressions of the words learned by the machine learning processing program. When performing the process, the learning unit 131 performs the process by using the group from which the designated words are eliminated.

When editing a machine learning result, the display controlling unit 132 receives a first word subject to an editing process from the administrator. When having received the first word, the display controlling unit 132 refers to the learning result storage unit 121, extracts a group of words close to the first word, i.e., a group of relevant words, from the machine learning result, and generates an editing screen. The display controlling unit 132 causes the display unit 111 to display the generated editing screen.

In other words, the display controlling unit 132 generates the group of relevant words on the basis of the expressions of the words learned by the machine learning processing program and causes the display unit 111 to display the generated group of relevant words. In this situation, the group of relevant word is a group containing a relatively large number of words that are, as individual words, used in predetermined expressions close to each other in the result of learning the expressions of the words.

The changing unit 133 is configured to receive a second word to be eliminated by the administrator, on the editing screen displayed on the display unit 111. Further, the changing unit 133 is also configured to receive a third word to be added by the administrator, on the editing screen.

The changing unit 133 judges whether or not the second word to be eliminated has been received. When the second word to be eliminated has been received, the changing unit 133 cuts the association between the first word and the second word. More specifically, for example, the changing unit 133 deletes the received second word from the learning result storage unit 121.

In other words, the changing unit 133 exercises control so that, after the designation of the word to be eliminated from the displayed group of words is received, when the process is performed by using the group of relevant words generated on the basis of the expressions of the words learned by the machine learning processing program, the process is performed by using the group from which the designated word has been eliminated. In other words, the changing unit 133 is an example of the change controlling unit.

The changing unit 133 judges whether or not the third word to be added to the group of words has been received. When the third word to be added to the group of words has been received, the changing unit 133 establishes an association between the first word and the third word. More specifically, for example, the changing unit 133 assigns a vector similar to the vector of the first word to the third word and stores the result into the learning result storage unit 121.

In other words, when learning a new piece of input data in a machine learning process, the changing unit 133 learns the new piece of input data in the machine learning process while using, as an initial value, a parameter used for the expressions of the words included in the group other than the word for which the elimination designation has been received.

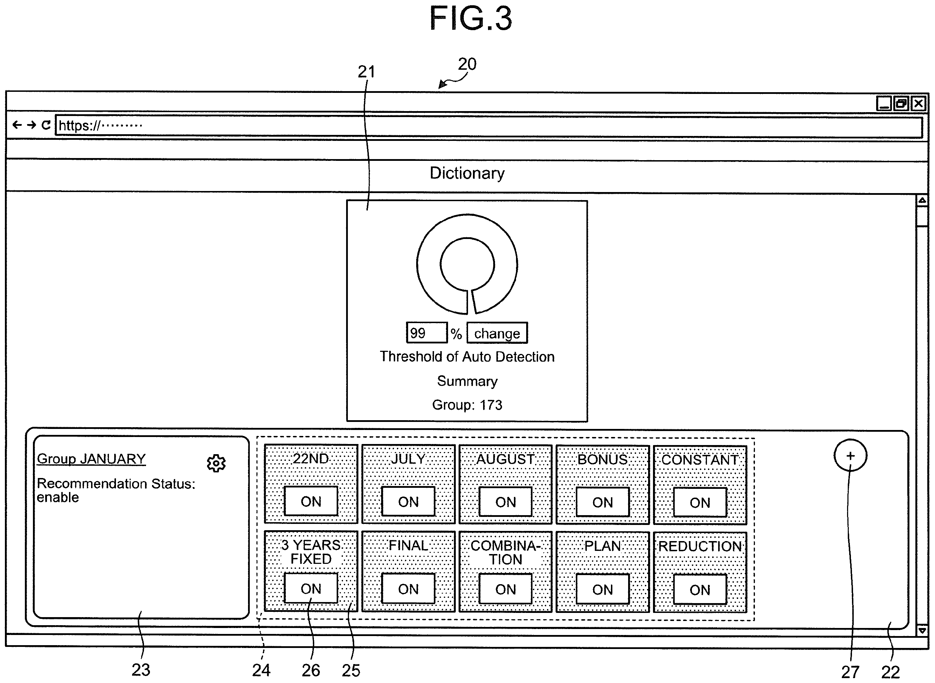

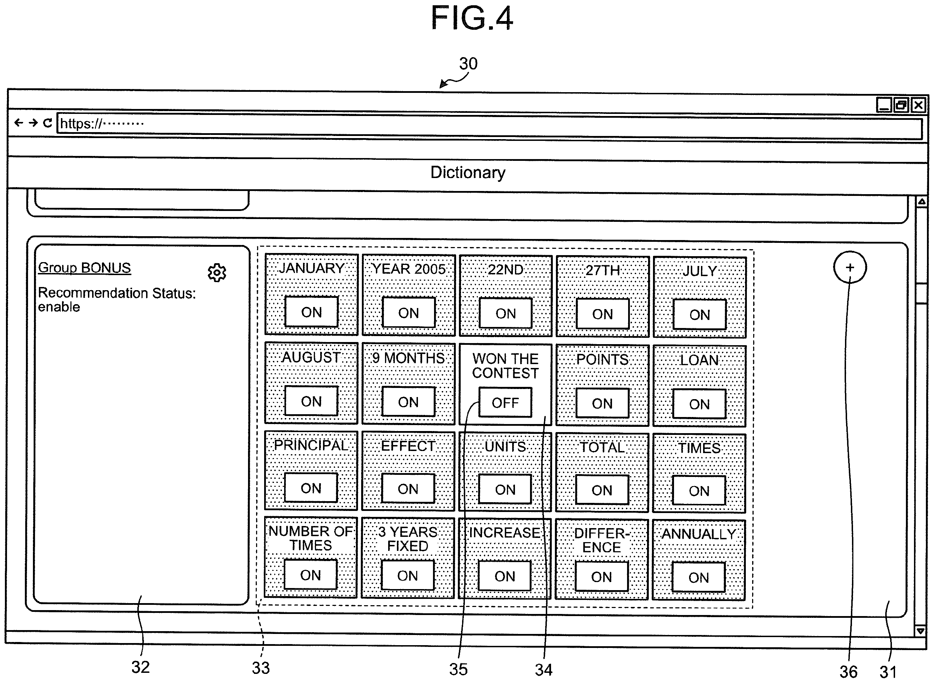

Next, the editing screen will be explained with reference to FIGS. 3 and 4. FIG. 3 is a drawing illustrating an example of the editing screen. An editing screen 20 illustrated in FIG. 3 has: a setting region 21 used for setting a threshold value for closeness of words with respect to the machine learning result; and an editing region 22 used for editing associations of a group of words close to the first word with the first word, i.e., the associations among the words belonging to the group of words relevant to the first word. Further, the editing region 22 includes a region 23 used for displaying the first word and a region 24 used for displaying the group of words close to the first word. For example, each of the words close to the first word is displayed in a corresponding one of the regions 25 and has a button 26 used for confirming the association thereof with the first word. In the example illustrated in FIG. 3, the association of each of the words close to the first word is indicated as "ON". Further, the editing region 22 has a button 27 used for adding the third word.

In the example of the editing screen 20, the threshold value for the closeness among the words is set as 99% or higher, and "January" is set as the first word. In that situation, displayed in the region 24 is the following group of words of which the word closeness (i.e., the levels of similarity based on the inner products of the vectors) to the word "January" is 99% or higher: "22nd", "July", "August", "bonus", "constant", "3 years fixed", "final", "combination", "plan", and "reduction". In this situation, when the button 27 is pressed, for example, a screen used for adding another word close to the first word is displayed, so that a word that is input is added to the group of words close to the first word, and also, a vector similar to that of the word "January" is generated and stored into the learning result storage unit 121.

FIG. 4 is a drawing illustrating another example of the editing screen. An editing screen 30 illustrated in FIG. 4 is, for example, a screen obtained by scrolling down from the editing screen 20 so as to display an editing region 31 related to another first word. The editing region 31 includes a region 32 used for displaying the first word and a region 33 used for displaying a group of words close to the first word. Among the group of words close to the first word, for the word "won the contest" displayed in a region 34, a button 35 used for confirming the association with the first word is indicated as "OFF". In other words, among the group of words close to the first word, the word "won the contest" is to be deleted from the learning result storage unit 121, as the second word to be eliminated. Further, similarly to the editing region 22, the editing region 31 also has a button 36 used for adding a third word.

Because the second word has been deleted from the learning result storage unit 121, the machine learning processing program (e.g., a chatbot) that refers to the learning result storage unit 121 handles the first word and the deleted second word as words used in distant expressions. For example, when a sentence containing the word "bonus" is input thereto, the chatbot referring to the learning result storage unit 121 handles the word "won the contest" as a word of which the word closeness (i.e., the level of similarity based on the inner product of the vectors) is 0%. In this situation, the level of similarity based on the inner product of the vectors does not necessarily have to be 0% and may be, for example, expressed with another numerical value such as 30% or 20%.

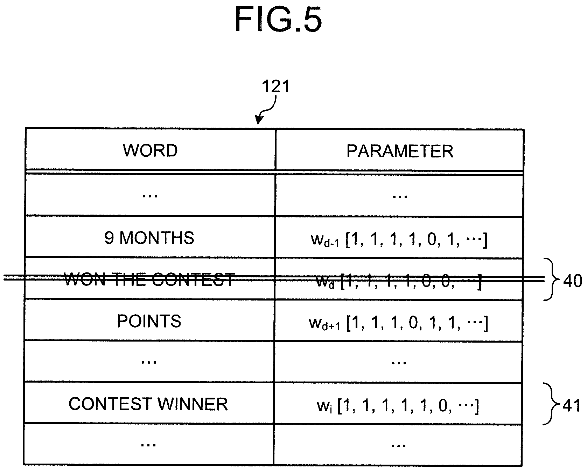

Next, the elimination and the addition of words from and to the learning result storage unit 121 will be explained with reference to FIG. 5. FIG. 5 is a drawing illustrating examples of the elimination and the addition of the words. FIG. 5 illustrates the state of the learning result storage unit 121 from which the word "won the contest" has been eliminated and to which the word "contest winner" has been added. When having received the elimination of the word "won the contest", the changing unit 133 deletes line 40 storing therein the parameter of the word "won the contest" from the learning result storage unit 121. Subsequently, when having received the addition of the word "contest winner", the changing unit 133 adds line 41 storing therein the parameter of the word "contest winner" to the learning result storage unit 121. In that situation, as for the parameter (i.e., a vector wᵢ) of the word "contest winner", for example, the changing unit 133 may calculate an average value of the vectors of a group of words obtained by eliminating the word "won the contest" from the group of words close to the first word "bonus" illustrated in FIG. 4, as the vector wi of the word "contest winner". In other words, the changing unit 133 deletes the vector w_{d} of "won the contest" and adds the vector wᵢ of "contest winner". Further, the vector wᵢ of "contest winner" is such a vector that has a level of similarity of 99% or higher to vectors W_{d-1} and w_{d+1} that are similar to the vector w_{d} of "won the contest".

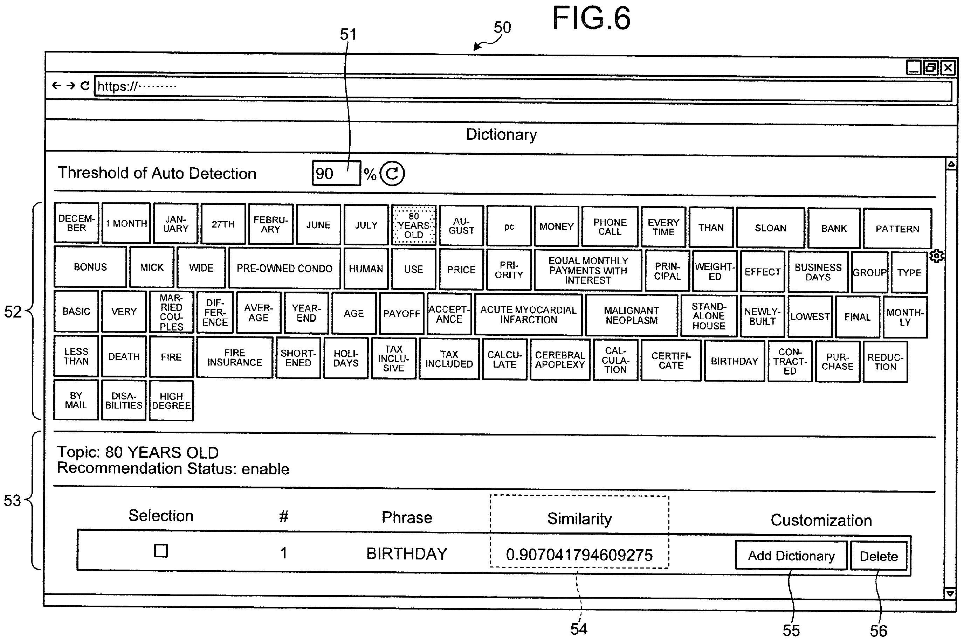

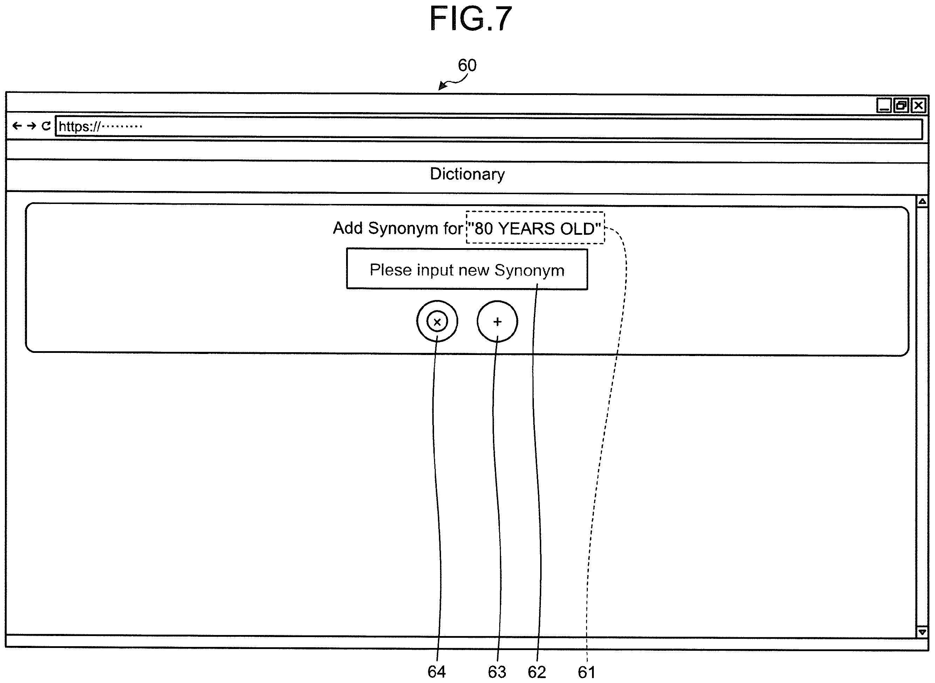

Another example of the editing screen will be explained with reference to FIGS. 6 and 7. FIG. 6 is a drawing illustrating yet another example of the editing screen. An editing screen 50 illustrated in FIG. 6 has: a setting box 51 used for setting a threshold value for the word closeness with respect to the machine learning result; and a word group region 52 used for displaying a group of words. Further, the editing screen 50 has a setting region 53 used for displaying a first word selected from the word group region 52 and a group of words close to the first word. For example, when "80 years old" is selected as a first word from among the words in the word group region 52, a group of words of which the level of similarity to "80 years old" is "90%" (which is set in the setting box 51) or higher (i.e., the words belonging to a group of relevant words) is listed in the setting region 53. Although FIG. 6 illustrates the situation where the word "birthday" among the group of words is displayed in the setting region 53, two or more words from the group of words may be displayed. Further, in the setting region 53, information 54 indicating the level of similarity between "80 years old" and "birthday" is displayed. Further, the setting region 53 has a button 55 used for adding a third word to the learning result storage unit 121 and a button 56 used for eliminating a word selected from among the group of words close to the first word, from the learning result storage unit 121.

FIG. 7 is a drawing illustrating yet another example of the editing screen. An editing screen 60 illustrated in FIG. 7 is a screen that is displayed when, for example, the button 55 is pressed on the editing screen 50 illustrated in FIG. 6. The editing screen 60 has: a first word region 61 displaying the word "80 years old" selected as a first word on the editing screen 50; an input box 62 used for receiving an input of a word to be added to the group of words close to the first word; a confirm button 63; and a cancel button 64. On the editing screen 60, when a third word is input into the input box 62 and the confirm button 63 is pressed, the vector of the third word is calculated on the basis of the vectors of the words belonging to the group of words, so that the third word and the calculated vector are stored into the learning result storage unit 121 so as to be kept in correspondence with each other. In this situation, on the editing screen 60, when the third word is input into the input box 62 and either the confirm button 63 or the cancel button 64 is pressed, the display returns to the editing screen 50.

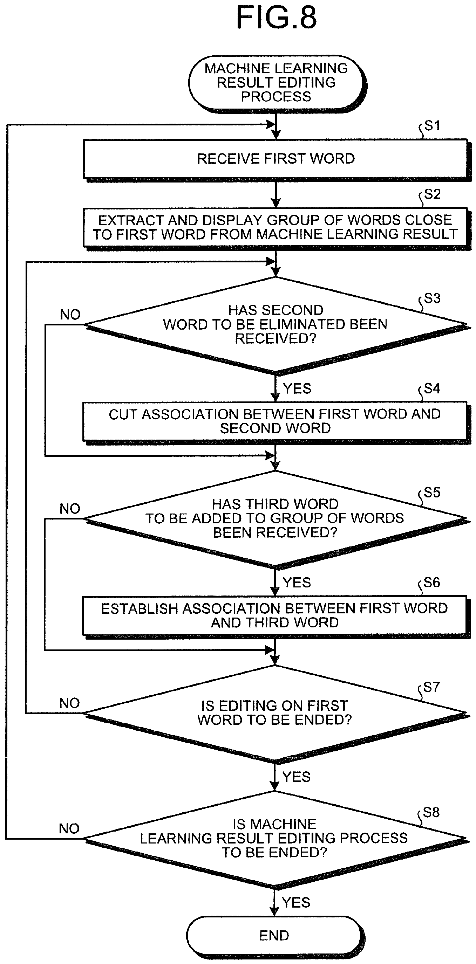

Next, an operation performed by the information processing apparatus 100 according to the first embodiment will be explained. FIG. 8 is a flowchart illustrating an example of a machine learning result editing process according to the first embodiment.

When editing a machine learning result, the display controlling unit 132 receives a first word subject to an editing process from the administrator (step S1). When having received the first word, the display controlling unit 132 refers to the learning result storage unit 121, extracts a group of words close to the first word from the machine learning result, and generates an editing screen. The display controlling unit 132 causes the display unit 111 to display the generated editing screen (step S2).

The changing unit 133 judges whether or not a second word to be eliminated has been received on the editing screen displayed on the display unit 111 (step S3). When the second word to be eliminated has been received (step S3: Yes), the changing unit 133 cuts the association between the first word and the second word (step S4) and proceeds to step S5. When no second word to be eliminated has been received (step S3: No), the changing unit 133 proceeds to step S5.

The changing unit 133 judges whether or not a third word to be added to the group of words has been received (step S5). When the third word to be added to the group of words has been received (step S5: Yes), the changing unit 133 establishes an association between the first word and the third word (step S6) and proceeds to step S7. When no third word to be added to the group of words has been received (step S5: No), the changing unit 133 proceeds to step S7.

The changing unit 133 judges whether or not the editing process on the first word is to be ended, on the basis of an operation input from the administrator, for example (step S7). When the editing process on the first word is not to be ended (step S7: No), the changing unit 133 returns to step S3. On the contrary, when the editing process on the first word is to be ended (step S7: Yes), the changing unit 133 judges whether or not the machine learning result editing process is to be ended, on the basis of an operation input from the administrator, for example (step S8). When the machine learning result editing process it not to be ended (step S8: No), the changing unit 133 returns to step S1. On the contrary, when the machine learning result editing process is to be ended (step S8: Yes), the changing unit 133 ends the machine learning result editing process. By using this configuration, the information processing apparatus 100 is able to easily eliminate the word from the machine learning result. Further, the information processing apparatus 100 is able to easily add the word to the machine learning result. Furthermore, the information processing apparatus 100 is able to learn new words while eliminating the words related only to specific businesses from the machine learning result and keeping the part of the learning result that is common to the relevant businesses. Consequently, it is possible to reduce the amount of information to be newly learned in the machine learning process.

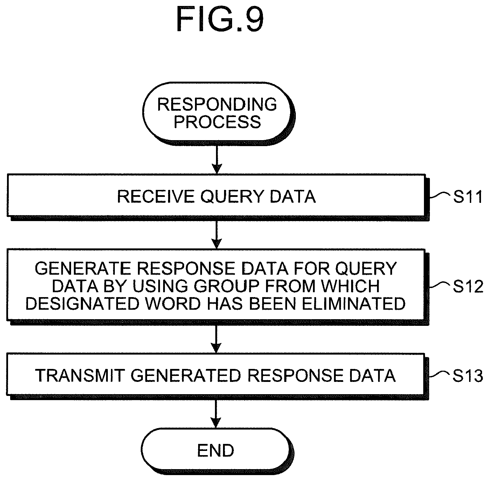

Next, a responding process according to the first embodiment will be explained, with reference to FIG. 9. FIG. 9 is a flowchart illustrating an example of the responding process according to the first embodiment.

The learning unit 131 receives query data from, for example, another information processing apparatus (not illustrated) (step S11). When having received the query data, the learning unit 131 refers to the learning result storage unit 121 and generates response data for the query data by using the group from which the designated word has been eliminated (step S12). The learning unit 131 transmits the generated response data to the other information apparatus (not illustrated) (step S13). With this configuration, when performing the process by using the group of relevant words generated on the basis of the expressions of the words learned by the machine learning processing program, the information processing apparatus 100 is able to perform the process by using the group from which the designated word has been eliminated.

As explained above, the information processing apparatus 100 generates the group of relevant words, on the basis of the expressions of the words learned by the machine learning processing program that learns the expressions of the words on the basis of the input data. Further, the information processing apparatus 100 causes the display unit 111 to display the generated group of relevant words. In addition, the information processing apparatus 100 exercises control so that, after the designation of the word to be eliminated from the displayed group of words is received, when a process is performed by using the group of relevant words generated on the basis of the expressions of the words learned by the machine learning processing program, the process is performed by using the group from which the designated word has been eliminated. As a result, it is possible to easily eliminate the word from the machine learning result.

Further, when learning the new piece of input data in the machine learning process, the information processing apparatus 100 learns the new piece of input data in the machine learning process while using, as the initial value, the parameter used for the expressions of the words included in the group other than the word for which the elimination designation has been received. Consequently, it is possible to easily add the word to the machine learning result.

Furthermore, the information processing apparatus 100 is configured so that the group of relevant words is a group containing a relatively large number of words that are, as individual words, used in the predetermined expressions close to each other in the result of learning the expression of the words. Consequently, it is possible to present the words each having a high possibility of being used by the machine learning processing program.

### [b] Second Embodiment

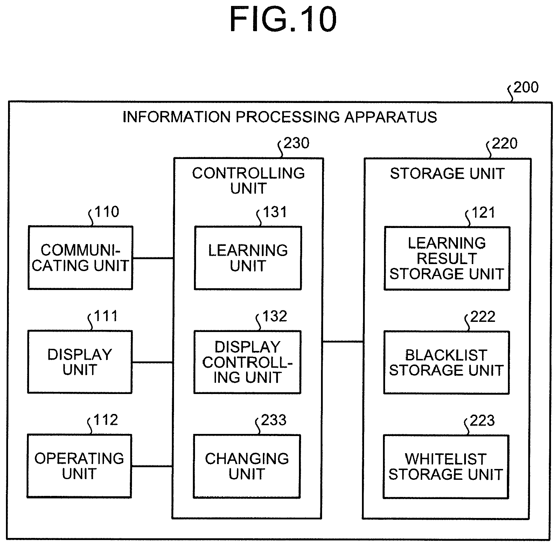

In the first embodiment described above, the word to be eliminated from the group of words and the word to be added to the group of words are reflected into the learning result storage unit 121; however, it is also acceptable to store the eliminated word and the added word into a storage unit different from the learning result storage unit 121. An embodiment in this situation will be explained as a second embodiment. FIG. 10 is a block diagram illustrating an exemplary configuration of an information processing apparatus according to the second embodiment. In contrast to the information processing apparatus 100 according to the first embodiment, an information processing apparatus 200 according to the second embodiment illustrated in FIG. 10 includes a storage unit 220 and a controlling unit 230 in place of the storage unit 120 and the controlling unit 130. Some of the elements in the configuration that are the same as those in the information processing apparatus 100 according to the first embodiment will be referred to by using the same reference characters, and explanations of the duplicate elements in the configuration and the operations thereof will be omitted.

In contrast to the storage unit 120, the storage unit 220 further includes a blacklist storage unit 222 and a whitelist storage unit 223.

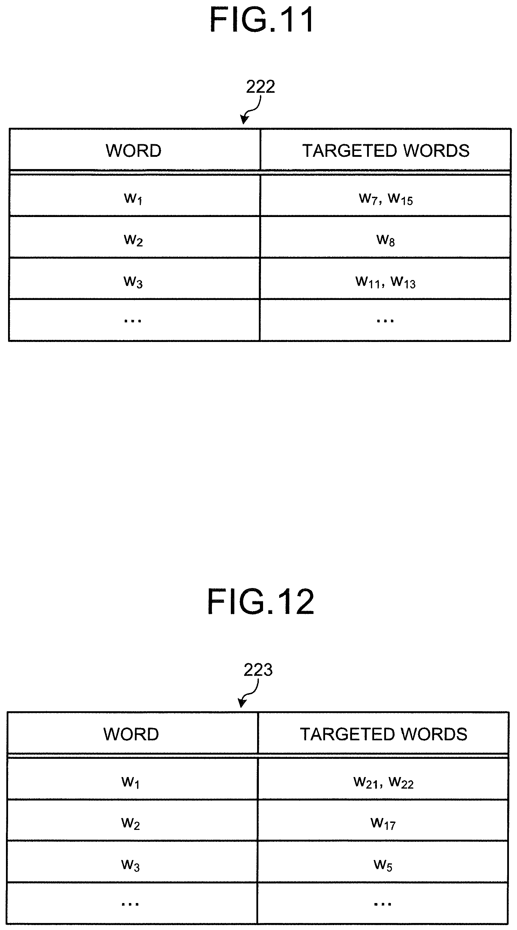

The blacklist storage unit 222 is configured to store therein one or more words to be eliminated from the machine learning result so as to be kept in correspondence with each of the words. In other words, the blacklist storage unit 222 is configured to store therein one or more second words to be eliminated from the machine learning result so as to be kept in correspondence with each of the first words. FIG. 11 is a drawing illustrating an example of the blacklist storage unit. As illustrated in FIG. 11, the blacklist storage unit 222 has the items "word" and "targeted words". For example, the blacklist storage unit 222 stores therein one record for each of the words.

Each "word" is either a morpheme or a word obtained by performing a morpheme analysis on a sentence in the learning-purpose data. Each entry of "targeted words" is information indicating one or more words to be eliminated from the learning result, with respect to the corresponding "word". The example in the first line of FIG. 11 indicates that, from the learning result with respect to the word "w₁", the targeted words "w₇" and "w₁₅" are to be eliminated. In the example in FIG. 11, each "word" is expressed with the symbol of the vector of the word.

Returning to the description of FIG. 10, the whitelist storage unit 223 is configured to store therein one or more words to be added to the machine learning result so as to be kept in correspondence with each of the words. In other words, the whitelist storage unit 223 is configured to store therein one or more third words to be added to the machine learning result so as to be kept in correspondence with each of the first words. FIG. 12 is a drawing illustrating an example of the whitelist storage unit. As illustrated in FIG. 12, the whitelist storage unit 223 has the items "word" and "targeted words". For example, the whitelist storage unit 223 stores therein one record for each of the words.

Each "word" is either a morpheme or a word obtained by performing a morpheme analysis on a sentence in the learning-purpose data. Each entry of "targeted words" is information indicating one or more words to be added, with respect to the corresponding "word". The example in the first line of FIG. 12 indicates that, to the learning result with respect to the word "w₁", the targeted words "w₂₁" and "w₂₂" are to be added. In the example in FIG. 12, each "word" is expressed with the symbol of the vector of the word.

Returning to the description of FIG. 10, in contrast to the controlling unit 130, the controlling unit 230 includes a changing unit 233 in place of the changing unit 133.

The changing unit 233 is configured to receive one or more second words to be eliminated by the administrator, on the editing screen displayed on the display unit 111. Further, the changing unit 233 is also configured to receive one or more third words to be added by the administrator, on the editing screen.

The changing unit 233 judges whether or not the one or more second words to be eliminated have been received. When the one or more second words to be eliminated have been received, the changing unit 233 cuts the association between the first word and the second words. More specifically, for example, the changing unit 233 stores the second words into the blacklist storage unit 222 so as to be kept in correspondence with a blacklist of the first word.

The changing unit 233 judges whether or not one or more third words to be added to the group of words have been received. When the one or more third words to be added to the group of words have been received, the changing unit 233 establishes an association between the first word and the third words. More specifically, for example, the changing unit 233 assigns a vector similar to the vector of the first word to each of the third words and stores the result into the whitelist storage unit 223.

In other words, in contrast to the changing unit 133 being configured to reflect the changes into the learning result storage unit 121, the changing unit 233 is different for being configured to store the changes into the blacklist storage unit 222 and the whitelist storage unit 223. However, because the operations performed by the information processing apparatus 200 are the same, except for the difference, as the operations performed by the information processing apparatus 100 according to the first embodiment, explanations about the machine learning result editing process and the responding process performed by the information processing apparatus 200 will be omitted.

As explained above, similarly to the information processing apparatus 100 according to the first embodiment, the information processing apparatus 200 according to the second embodiment is also able to easily eliminate the words from the machine learning result. Further, the information processing apparatus 200 is able to easily add the words to the machine learning result. Furthermore, the information processing apparatus 200 is able to learn new words while eliminating the words related only to specific businesses from the machine learning result and keeping the part of the learning result that is common to the relevant businesses. Consequently, it is possible to reduce the amount of information to be newly learned in the machine learning process.

In the embodiments described above, the chatbot used by the financial institution was explained as an example; however, possible embodiments are not limited to this example. For instance, it is possible to similarly edit machine learning results obtained by having an instruction manual of any of various types of apparatuses or Frequently Asked Questions (FAQs) learned.

Further, in the embodiments described above, the words to be eliminated are either deleted from the learning result storage unit 121 or stored as the blacklist, while the words to be added are either added to the learning result storage unit 121 or stored as the whitelist. However, possible embodiments are not limited to this example. For instance, with respect to a learning result obtained by eliminating, from a learning result of a chatbot designed for a certain financial institution, one or more words specific to the financial institution, it is also acceptable to cause a machine learning processing program to learn the data of commercial products of another financial institution. In other words, the machine learning processing program is caused to learn the sentence data of an instruction manual or FAQs, instead of having the words added thereto. With this configuration, it is possible to reduce the amount of information to be newly learned in the machine learning process for the other financial institution.

Further, the constituent elements of the functional units illustrated in drawings do not necessarily have to physically be configured as indicated in the drawings. In other words, the specific modes of distribution and integration of the functional units are not limited to those illustrated in the drawings. It is acceptable to functionally or physically distribute or integrate all or a part of the functional units in any arbitrary units, depending on various loads and the status of use. For example, the display controlling unit 132 and the changing unit 133 may be integrated together. Further, the processes illustrated in the drawings do not necessarily have to be performed in the order stated above. It is acceptable to perform any of the processes at the same time as one another or in an order different from the order described above, as long as no conflict arises in the contents of the processing.

Further, all or an arbitrary part of various types of processing functions realized by the apparatuses and the devices may be executed by a CPU (or a microcomputer such as an MPU or a Micro Controller Unit [MCU]). Further, needless to say, all or an arbitrary part of the various types of processing functions may be realized by a program analyzed and executed by a CPU (or a microcomputer such as an MPU or an MCU) or hardware using wired logic.

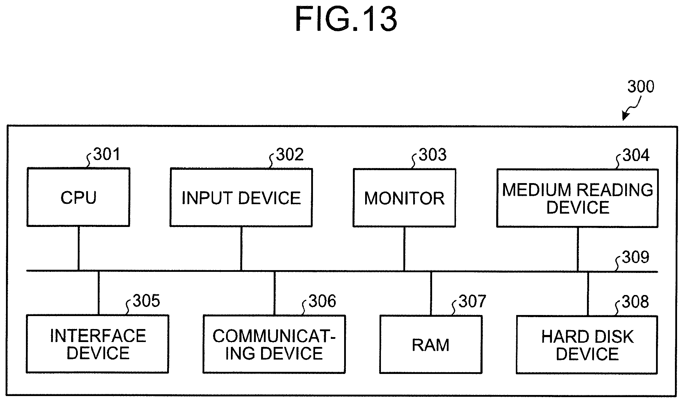

Further, the various types of processes described in the embodiments above may be realized by causing a computer to execute a program prepared in advance. Thus, in the following sections, an example of such a computer that executes the program having the same functions as those described in the embodiments above will be explained. FIG. 13 is a drawing illustrating an example of a computer that executes a machine learning result editing program.

As illustrated in FIG. 13, a computer 300 includes: a CPU 301 configured to execute various types of arithmetic processing processes; an input device 302 configured to receive an input of data; and a monitor 303. Further, the computer 300 includes: a medium reading device 304 configured to read a program or the like from a storage medium; an interface device 305 configured to establish a connection with various types of apparatuses, and a communicating device 306 configured to establish a connection with another information processing apparatus or the like in a wired or wireless manner. Furthermore, the computer 300 includes: a RAM 307 configured to temporarily store therein various types of information; and a hard disk device 308. Further, the devices 301 to 308 are connected to a bus 309.

The hard disk device 308 stores therein the machine learning result editing program having the same functions as those of the processing units such as the learning unit 131, the display controlling unit 132, and the changing unit 133 illustrated in FIG. 1. Alternatively, the hard disk device 308 may store therein the machine learning result editing program having the same functions as those of the processing units such as the learning unit 131, the display controlling unit 132, and the changing unit 233 illustrated in FIG. 10. Further, the hard disk device 308 stores therein various types of data used for realizing the learning result storage unit 121 and the machine learning result editing program. Alternatively, the hard disk device 308 may store therein various types of data used for realizing the learning result storage unit 121, the blacklist storage unit 222, the whitelist storage unit 223, and the machine learning result editing program. The input device 302 is configured, for example, to receive an input of various types of information such as the operation information from an administrator of the computer 300. The monitor 303 is configured to display, for example, various types of screens such as the editing screen for the administrator of the computer 300. The interface device 305 has a printing device or the like connected thereto, for example. For example, the communicating device 306 has the same functions as those of the communicating unit 110 illustrated in either FIG. 1 or FIG. 10 and is configured to exchange various types of information with another information processing apparatus while being connected to a network (not illustrated).

The CPU 301 is configured to perform various types of processes by reading the programs stored in the hard disk device 308, loading the read programs into the RAM 307, and executing the programs. Further, the programs are capable of causing the computer 300 to function as the learning unit 131, the display controlling unit 132, and the changing unit 133 illustrated in FIG. 1. Alternatively, the programs are capable of causing the computer 300 to function as the learning unit 131, the display controlling unit 132, and the changing unit 233 illustrated in FIG. 10.

Further, the machine learning result editing program described above does not necessarily have to be stored in the hard disk device 308. For example, another arrangement is acceptable in which the program stored in a storage medium readable by the computer 300 is read and executed by the computer 300. Examples of the storage medium readable by the computer 300 include a portable recording medium such as a Compact Disk Read-Only Memory (CD-ROM), a Digital Versatile Disk (DVD), or a Universal Serial Bus (USB) memory, a semiconductor memory such as a flash memory, and a hard disk drive. Further, it is also acceptable to store the machine learning result editing program into apparatuses connected to a public communication line, the Internet, or a Local Area Network (LAN), so that the computer 300 reads and executes the machine learning result editing program from any of the apparatuses.

It is possible to easily eliminate the words from the machine learning result.

## Claims

1. A machine learning result editing program that is a processing program configured to generate a group of relevant words on a basis of expressions of words learned by a machine learning processing program that learns the expressions of the words on a basis of input data, the machine learning result editing program that causes a computer to execute a process comprising:
causing (132) a display unit (111) to display the generated group of relevant words; and
exercising (133) control so that, after a designation of a word to be eliminated from the displayed group of relevant words is received, when a process is performed by using the group of relevant words generated on the basis of the expressions of the words learned by the machine learning processing program, the process is performed by using the group from which the designated word has been eliminated.

2. The machine learning result editing program according to claim 1, wherein the machine learning result editing program causes the computer to execute the process further comprising:
when learning (131) a new piece of input data in a machine learning process, learning the new piece of input data in the machine learning process while using, as an initial value, a parameter used for expressions of words included in the group other than the word for which the elimination designation has been received.

3. The machine learning result editing program according to claim 1, wherein the group of relevant words is a group containing a relatively large number of words that are, as individual words, used in predetermined expressions close to each other in a result of learning the expressions of the words.

4. A method for editing a machine learning result that is a processing method by which a group of relevant words is generated on a basis of expressions of words learned by a machine learning processing program that learns the expressions of the words on a basis of input data, wherein a computer is caused to execute a process comprising:
causing (132) a display unit (111) to display the generated group of relevant words; and
exercising (133) control so that, after a designation of a word to be eliminated from the displayed group of relevant words is received, when a process is performed by using the group of relevant words generated on the basis of the expressions of the words learned by the machine learning processing program, the process is performed by using the group from which the designated word has been eliminated.

5. The method for editing the machine learning result according to claim 4, wherein the computer is caused to execute the process further comprising:
when learning (131) a new piece of input data in a machine learning process, learning the new piece of input data in the machine learning process while using, as an initial value, a parameter used for expressions of words included in the group other than the word for which the elimination designation has been received.

6. The method for editing the machine learning result according to claim 4, wherein the group of relevant words is a group containing a relatively large number of words that are, as individual words, used in predetermined expressions close to each other in a result of learning the expressions of the words.

7. An information processing apparatus that generates a group of relevant words on a basis of expressions of words learned by a machine learning processing program that learns the expressions of the words on a basis of input data, the information processing apparatus comprising:
a display controlling unit (132) that causes a display unit (111) to display the generated group of relevant words; and
a change controlling unit (133) that exercises control so that, after a designation of a word to be eliminated from the displayed group of relevant words is received, when a process is performed by using the group of relevant words generated on the basis of the expressions of the words learned by the machine learning processing program, the process is performed by using the group from which the designated word has been eliminated.

8. The information processing apparatus according to claim 7, wherein, when learning (131) a new piece of input data in a machine learning process, the change controlling unit further learns the new piece of input data in the machine learning process while using, as an initial value, a parameter used for expressions of words included in the group other than the word for which the elimination designation has been received.

9. The information processing apparatus according to claim 7, wherein the group of relevant words is a group containing a relatively large number of words that are, as individual words, used in predetermined expressions close to each other in a result of learning the expressions of the words.
